# EUROPEAN PATENT APPLICATION

(11) **EP 2 372 124 A2**
(43) Date of publication of application: **05.10.2011**
(21) Application number: 11002262.1
(22) Date of filing: 18.03.2011
(51) Int. Cl.: F01P 7/16

(54) **Thermostat device**

(30) Priority: 29.03.2010 JP 2010075600
(71) Applicant: Fuji Bellows Co., Ltd., Yamato-shi, Kanagawa 242-0012 (JP); Corea Electronics Corporation, Chungcheongbuk-do 380-250 (KR)
(72) Inventor: Park, Hee Wan, Seoul, 137070 (KR); Suzuki, Takatomo, Yamato-shi Kanagawa, 2420012 (KR)
(74) Representative: Klingseisen, Franz

(57) **Abstract**

Provided is a thermostat device which improves the assembling work, reduces the manufacturing cost, and transfers heat to a temperature sensing/operating part more efficiently. The thermostat device includes a cylindrical high-temperature-coolant rectification part which forms a high-temperature coolant passage to bypass a high-temperature coolant heated by an engine, and is communicated and extended so as to partially or entirely cover the temperature sensing/operating part, permitting the high-temperature coolant flowing in the high-temperature coolant passage flow out from a discharge opening after being in contact with the periphery (bottom surface/side surface) of the temperature sensing/operating part, a receiving part provided on the outer periphery side of the high-temperature-coolant rectification part, a spring fitted between the valve body and the receiving part to press the valve body in a valve closing direction and press the receiving part in a direction away from the valve body, and a frame which is continual from an upper end of a piston shaft and engages with the pressed receiving part while receiving urging force thereof.

## Description

### BACKGROUND OF THE INVENTION

### Field of the Invention

The present invention relates to a thermostat device which automatically controls the temperature of a coolant to cool mainly the engine of an automobile mainly.

### Description of the Related Art

As shown in Fig. 9A, for example, a conventional thermostat device 400 (see Japanese Patent No. 4422193) belongs to the category of a so-called entrance control system that controls the temperature of a coolant C caused to flow into an engine 151 by controlling the mixing ratio of an inflow low-temperature coolant A cooled by a radiator 152 and an inflow high-temperature coolant B supplied via a bypass 153 from the engine 151.

Namely, this control system includes a bypass port 133 to which the high-temperature coolant B passed through the engine 151 is directly supplied via a bypass 153, and a radiator link port 131 to which the low-temperature coolant A, which is part of the high-temperature coolant B passed through the engine 151, is cooled in the radiator 152 and supplied from the radiator 152. In a housing body interior 132, the low-temperature coolant A and the high-temperature coolant B are mixed with each other to produce the coolant C. This generated coolant C will be supplied to the engine 151 via an engine link port 130.

The thermostat device 400 is characterized in that the thermostat device 400 can achieve the state where the operational state of a temperature sensing/operating part is controllable only by most of the temperature of high-temperature coolant, so that it operates to make the temperature of the high-temperature coolant B flowing out of the engine 151 constant.

A cabin heater 201 is provided in a route from the bypass 153 to the radiator 52.

To execute this control, the thermostat device 400 further has a casing formed by a housing body 148 and a housing cover 147 attached to the housing body 148. The housing body 148 has internal shapes molded to correspond to the bypass port 133 and the engine link port 130. The housing cover 147 has a shape molded to correspond to the radiator link port 131. The housing body 148 and the housing cover 147 are each made of aluminum (die-casting), a plastic, or the like.

This thermostat device 400 includes a temperature sensing/operating part 139, a piston shaft 134 having one end retained in the temperature sensing/operating part 139, a piston shaft support 135 which is formed on that side of the radiator link port 131 and supports the other end of the piston shaft 134, a main valve 136 integrally attached to the temperature sensing/operating part 139, a spring 141 which presses the main valve 136 toward the radiator link port 131, and a high-temperature-coolant rectification part 142 protruding from the bypass port 133 towards the housing body interior 132, and connected via a discharge opening 146 to the housing body interior 132 from the bypass port 133. The temperature sensing/operating part 139 is configured to be guided and inserted into a support guide part 162 in the high-temperature-coolant rectification part 142.

The support guide part 162 is formed of steel by bending, pressing or the like, and is disposed in such a way that the side surface of the temperature sensing/operating part 139 is insertable in the support guide part 162. The support guide part 162 is provided with multiple holes (not shown). The high-temperature coolant B passes through the unillustrated holes.

The inside diameter of the high-temperature-coolant rectification part 142 is set larger than the outside diameter of the temperature sensing/operating part 139. As a result, when the tip of the temperature sensing/operating part 139 is inserted into a pipe constituting the high-temperature-coolant rectification part 142, the insertion is carried out in a so-called loose insertable state where a spatial clearance is present between the inner wall of the high-temperature-coolant rectification part 142 and the outer wall of the temperature sensing/operating part 139.

The spring 141 is fitted over the periphery of the high-temperature-coolant rectification part 142. A frame 159 is embedded in the high-temperature-coolant rectification part 142, and has one end fixed to the housing cover 147.

According to the thermostat device 400 with the foregoing configuration, when the hot high-temperature coolant B heated by the engine 151 is supplied to the bypass port 133, the high-temperature coolant B is supplied to the high-temperature-coolant rectification part 142. The high-temperature-coolant rectification part 142 can make the supplied high-temperature coolant B directly contact the periphery of the temperature sensing/operating part 139. The temperature sensing/operating part 139 is loosely inserted in the high-temperature-coolant rectification part 142 beforehand and is stationary, with a predetermined clearance previously formed between the temperature sensing/operating part 139 and the high-temperature-coolant rectification part 142. The high-temperature coolant B will flow out into the housing body interior 132 through the clearance formed between the temperature sensing/operating part 139 and the high-temperature-coolant rectification part 142. This makes it possible to permit the high-temperature coolant B to directly contact the periphery (bottom surface/side surface) of the temperature sensing/operating part 139 for heat transfer without impairing the temperature and the flow rate of the high-temperature coolant B. Accordingly, the temperature sensing/operating part 139 can detect the temperature of the high-temperature coolant B with high efficiency, and can be operated according to the temperature of the high-temperature coolant B.

Further, the high-temperature coolant B which has flowed out of the discharge opening 146 into the housing body interior 132 flows to surround the periphery of the temperature sensing/operating part 139. This can provide a state where the high-temperature coolant dominates the area where the temperature sensing/operating part 139 is disposed.

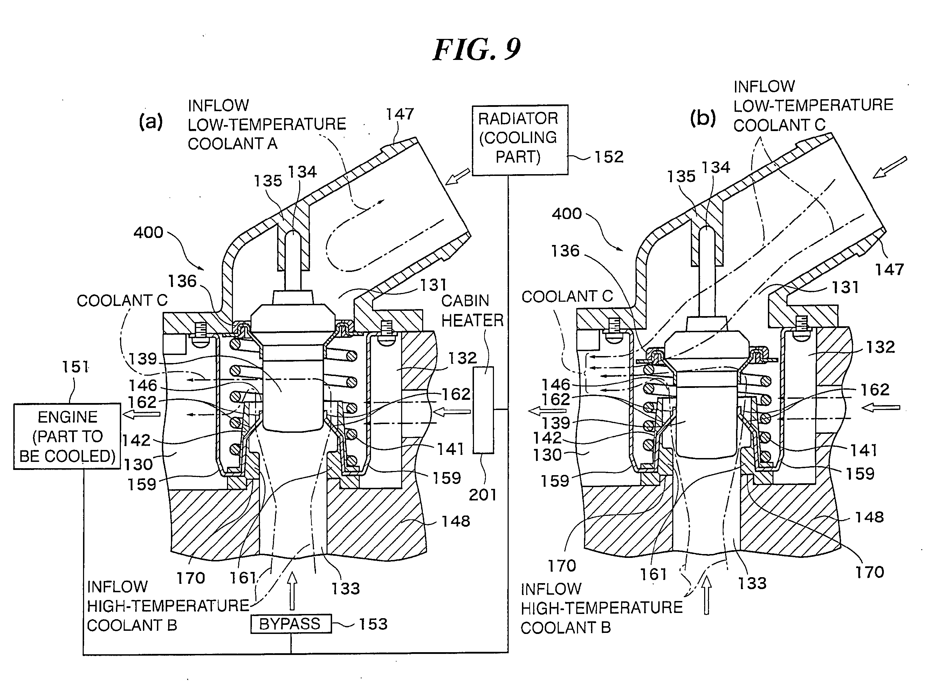

The main valve 136 is pressed toward the radiator link port 131 by the spring 141, so that when the temperature sensing/operating part 139 is not driven, the radiator link port 131 and the housing body interior 132 are shielded from each other. On the other hand, when the high-temperature coolant B of a predetermined temperature or higher is supplied into the high-temperature-coolant rectification part 142, as shown in Fig. 9B, the temperature sensing/operating part 139 is driven toward the bypass port 133, and accordingly, the main valve 136 is driven to be opened against the load of the spring 141. It is therefore possible to increase the inflow rate of the low-temperature coolant A from the radiator link port 131 to the housing body interior 132. As a result, the thermostat device 400 can control the inflow rate of the low-temperature coolant A from the radiator link port 131 to the housing body interior 132 according to the temperature of the high-temperature coolant B.

This thermostat device 400 can control the coolant temperature with high accuracy mainly in the engine cooling system of an automobile and can keep the temperature higher than that in the related art. This contributes to the improvement of the efficiency of the combustion of the engine, reduction of the friction loss of the engine, and reduction of the thermal loss, thereby contributing to reduction of fuel consumption of the engine.

Although the thermostat device 400 is illustrated as if the housing body 148 and a joint portion 170 of the high-temperature-coolant rectification part 142 are closely attached, the thermostat device 400 should actually be configured to have a slight clearance between the housing body 148 and a joint portion 170 of the high-temperature-coolant rectification part 142 in consideration of a sum of variations in the longitudinal dimensions of the individual parts.

When the high-temperature coolant B leaking toward the housing body interior 132 through the slight clearance of the joint portion 170 increases, the capability of the high-temperature-coolant rectification part 142 disclosed in the Japanese Patent No. 4422193 is impaired. It is therefore desirable to eliminate the clearance of the joint portion 170 as much as possible.

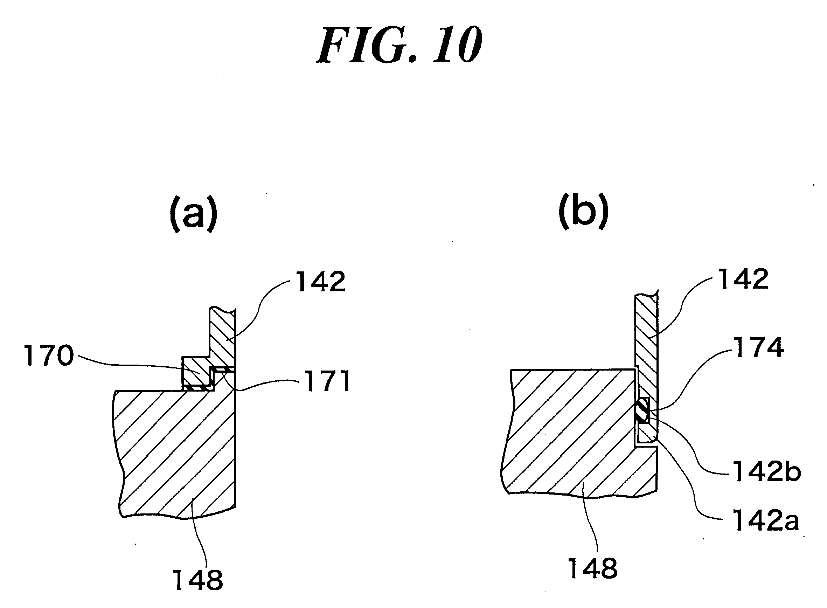

The following two approaches are possible to eliminate the clearance of the joint portion 170. According to the first approach, as shown in Fig. 9A, for example, an elastic member 171 such as rubber is interposed between the housing body 148 and the joint portion 170 of the high-temperature-coolant rectification part 142 to seal the clearance while absorbing the dimensional variations. According to the second approach, as shown in Fig. 10B, the lower portion of the high-temperature-coolant rectification part 142 is cylindrically extended to additionally provide a cylindrical portion 142a to absorb the longitudinal dimensional variations, and a seal member 174 is interposed between a groove 142b provided in the outer periphery of the cylindrical portion 142a and the inner wall of the housing body 148 in a shaft sealing manner to seal the clearance.

The process of assembling the conventional thermostat device 400 shown in Fig. 9 includes the step of inserting the temperature sensing/operating part 139 into the support guide part 162 in the high-temperature-coolant rectification part 142 while compressing the spring 141.

When the process proceeds without properly inserting the temperature sensing/operating part 139 into the support guide part 162, the peripheral parts may be broken. To cope with this problem, the temperature sensing/operating part 139 should be accurately inserted into the support guide part 162 while compressing the spring 141 with a comparatively large load in this process.

However, uniform pressure is unlikely to be applied to the individual circumferential portions that constitute the end coil of the spring 141, and when the spring 141 is compressed, the spring 141 is likely to be tilted toward some of the portions. Therefore, there is a limit to accurate fitting of the temperature sensing/operating part 139 into the support guide part 162 due to the limited accuracy of the shapes of the individual circumferential portions of the spring 141 and the limited accuracy of the shapes of the individual parts around the spring.

In addition, it is difficult to visually grasp, from outside, whether the temperature sensing/operating part 139 is inserted into the accurate position of the support guide part 162 or not. Particularly, it is necessary to provide the design that can easily and reliably achieve the aforementioned process under the circumstances that a large quantity of the structures each having the temperature sensing/operating part 139 inserted in the support guide part 162 should be produced at a low cost.

In addition, the assembly process of the conventional thermostat device 400 includes the step of assembling the thermostat device in such a way that the high-temperature-coolant rectification part 142 is communicated with the bypass port of the housing body 148.

With regard to this step, in particular consideration of suppressing the leakage of the high-temperature coolant B from the clearance of the joint portion 170 between the housing body 148 and the high-temperature-coolant rectification part 142, one needs to take into account how to hold the elastic member 171 like rubber on the housing body 148 or the high-temperature-coolant rectification part 142 beforehand at the time of assembling the thermostat device 400 in case of the structure of interposing the elastic member 171 between the housing body 148 and the high-temperature-coolant rectification part 142 to seal the clearance while absorbing the dimensional variations as done in the foregoing first approach. In assembling the thermostat device 400, there is a possibility that the elastic member 171 may come off from the housing body 148 or the high-temperature-coolant rectification part 142, or the elastic member 171 may be erroneously attached or may not be attached, disadvantageously.

In consideration of the situation that it is difficult to visually grasp, from outside, whether the elastic member 171 is properly disposed at a predetermined position or not, and the situation that it is necessary to produce a large quantity of the structures each having the elastic member 171 attached thereto at a low cost, it is necessary to provide the design that can easily and reliably achieve the aforementioned process.

When the second approach is adopted, the interposing of the seal member 174 in the groove 142b beforehand, for example, makes it possible to prevent the seal member 174 from coming off at the time of assembling. However, it is necessary to assemble the thermostat device 400 while looking for the position where the cylindrical portion 142a of the high-temperature-coolant rectification part 142 is properly inserted into the bypass port 133. In addition, under the situation that it is difficult to visually grasp, from outside, whether the high-temperature-coolant rectification part 142 is properly attached to the housing body 148 or not, and the situation that a large quantity of the structures should be produced at a low cost, it is necessary to provide the design that can easily and reliably achieve the aforementioned process.

Especially, in case of the shaft sealing design, there is a question of whether or not the seal member 174 loosely fitted in the groove 142 properly slides to be inserted into the housing body 148 when the cylindrical portion 142a of the high-temperature-coolant rectification part 142 is inserted into the bypass port 133. It is very troublesome to add a step of applying a lubrication member, such as the grease, to the seal member, which increases the manufacturing cost. In addition, there is a possibility that the insertion of the high-temperature-coolant rectification part 142 into the housing body 148 may be adversely affected by a slight change in the dimensions of each part and the state of the finished surface thereof.

Further, in case of the shaft sealing design, a large clearance between the hole forming the bypass port 133 and the cylindrical portion 142a cannot be provided, resulting in a severe requirement on the coaxiality of the center axial of the bypass port 133 and the center axial of the high-temperature-coolant rectification part 142. As a result, the individual parts that specifically define the coaxiality require high dimensional accuracy, so that the manufacturing cost cannot be reduced, disadvantageously.

Apparently, the first approach and the second approach both should still deal with the problems of lower assembling efficiency and an increase in manufacturing cost.

In addition to the aforementioned problems, the conventional thermostat device 400 shown in Fig. 9 is configured so that the temperature sensing/operating part 139 is guided and inserted into the support guide part 162 in the high-temperature-coolant rectification part 142, and the support guide part 162 is provided with multiple holes (not shown). The high-temperature coolant B passes through the unillustrated holes of the support guide part 162. The flow of the high-temperature coolant B while passing the unillustrated holes is disturbed by the holes. That is, the high-temperature coolant B passes through the unillustrated holes, and cannot smoothly pass over the surface of the temperature of the sensing portion of the temperature sensing/operating part 139. In addition, the shape of the support guide part 162 surrounding the periphery of the temperature sensing/operating part 139 impairs the contact area where efficient heat transfer between the high-temperature coolant B and the temperature sensing/operating part 139 can be effected, causing reduction in heat transfer response from the high-temperature coolant B to the temperature sensing/operating part 139. It is therefore necessary to permit the temperature sensing/operating part 139 to smoothly pass the high-temperature coolant B for efficient heat transfer to thereby improve the accuracy of the operation of the temperature sensing/operating part 139.

### SUMMARY OF THE INVENTION

Accordingly, it is an object of the present invention to provide a thermostat device which improves the assembling efficiency, reduces the manufacturing cost, transfers heat to a temperature sensing/operating part more efficiently, detects and controls the coolant temperature with high response and high accuracy.

A thermostat device according to the invention includes a temperature sensing/operating part provided in a coolant circuit of an engine or the like and incorporating a thermal expansion element which thermally expands or contracts according to a change in a temperature of a coolant; a piston shaft which has one end retained in the temperature sensing/operating part and slides with thermal expansion and contraction of the thermal expansion element, a valve body being opened/closed by driving of the piston shaft; a high-temperature-coolant rectification part configured to enable communication and extension of a high-temperature coolant passage to bypass a high-temperature coolant heated by the engine to the thermostat device so that the high-temperature coolant partially or entirely covers the temperature sensing/operating part, the high-temperature-coolant rectification part letting the high-temperature coolant flowing in the high-temperature coolant passage flow out from a discharge opening after being in contact with a periphery (bottom surface/side surface) of the temperature sensing/operating part; a receiving part provided on an outer periphery side of the high-temperature-coolant rectification part; an urging member fitted between the valve body and the receiving part to press the valve body in a valve closing direction and press the receiving part in a direction away from the valve body; and an engagement member continual to a valve seat member on which the valve body pressed in the valve closing direction is pressed to be closed, and engageable with the urged and pressed receiving part while receiving urging force thereof.

When the high-temperature-coolant rectification part is provided to communicate with the high-temperature coolant passage, the high-temperature-coolant rectification part may be pressed toward the high-temperature coolant passage to contract the urging member to enable separation of the receiving part and the engagement member from each other.

The thermostat device may include a support guide part to cause the temperature sensing/operating part to be guided and inserted into the high-temperature-coolant rectification part, the support guide part having a shape of a plurality of ribs protruding from an inner wall of the high-temperature-coolant rectification part.

A thermostat device according to the invention includes a temperature sensing/operating part provided in a coolant circuit of an engine or the like and incorporating a thermal expansion element which thermally expands or contracts according to a change in a temperature of a coolant; a piston shaft which has one end retained in the temperature sensing/operating part and slides with thermal expansion and contraction of the thermal expansion element, a valve body being opened/closed by driving of the piston shaft; and a high-temperature-coolant rectification part configured to enable communication and extension of a high-temperature coolant passage to bypass a high-temperature coolant heated by the engine to the thermostat device so as to partially or entirely cover the temperature sensing/operating part, the high-temperature-coolant rectification part letting the high-temperature coolant flowing in the high-temperature coolant passage flow out from a discharge opening after being in contact with a periphery (bottom surface/side surface) of the temperature sensing/operating part, part of a surface of an inner wall of the high-temperature-coolant rectification part serving as a support guide part to enable insertion of the temperature sensing/operating part.

In this case, the support guide part may have a shape of a plurality of ribs protruding from the inner wall of the high-temperature-coolant rectification part.

### Effect of the Invention

According to the invention, the thermostat device with the foregoing configuration can improve the assembling efficiency and reduce the manufacturing cost, and further it enables heat transfer to a temperature sensing/operating part more efficiently, and detects and controls the coolant temperature with high response and high accuracy.

### BRIEF DESCRIPTION OF THE DRAWINGS

Fig. 1 is a configurational diagram of a thermostat device to which the present invention is adapted;
Fig. 2A is a perspective view of a high-temperature-coolant rectification part;
Fig. 2B is a plan view of the high-temperature-coolant rectification part;
Fig. 3 is a diagram showing the state where a temperature sensing/operating part of the thermostat device to which the invention is adapted is operated;
Figs. 4A and 4B are diagrams for describing a method of assembling the thermostat device to which the invention is adapted;
Figs. 5A to 5C are diagrams showing an example where a plurality of ribs of the high-temperature-coolant rectification part are formed helically;
Fig. 6 is a diagram showing another configuration of the thermostat device to which the invention is adapted;
Fig. 7 is a diagram for describing a method of assembling the thermostat device to which the invention is adapted;
Fig. 8 is a diagram showing an example where an extending shaft extending downward from the temperature sensing/operating part and a support guide part for guiding the extending shaft are provided;
Figs. 9A and 9B are diagrams for describing the conventional thermostat device; and
Figs. 10A and 10B are diagrams illustrating a conventional method of eliminating a clearance at the joint portion.

### DETAILED DESCRIPTION OF THE PREFERRED EMBODIMENT

A thermostat device which is adaptable to control the coolant temperature of the engine of an automobile, as an embodiment of the present invention, will be described below with reference to the accompanying drawings.

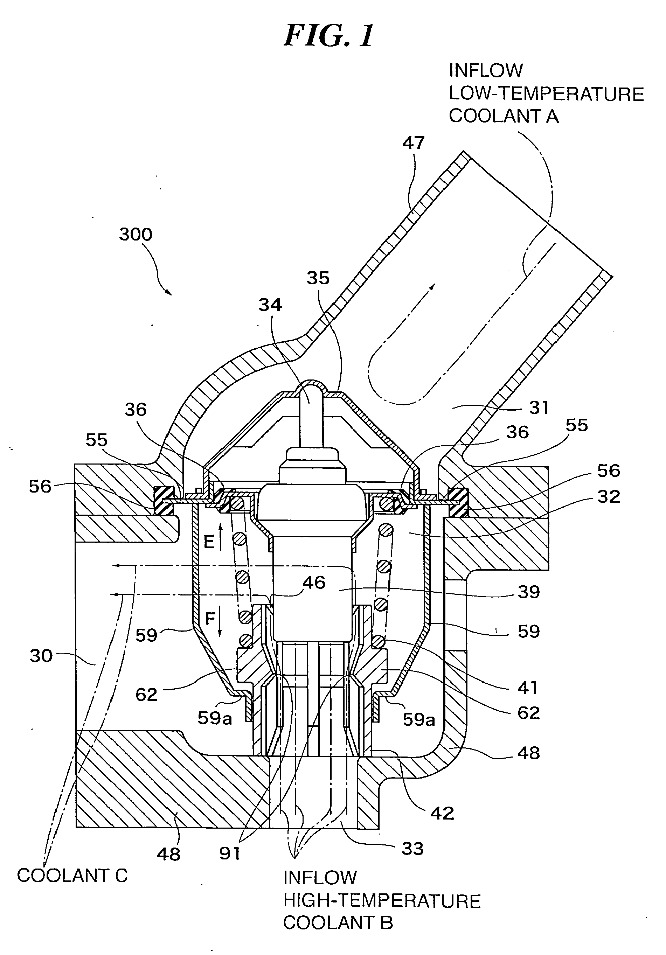

Fig. 1 shows an example of the configuration of a thermostat device 300 to which the invention is adapted. The thermostat device 300 controls the temperature of a coolant C caused to flow into an engine by controlling the mixing ratio of an inflow low-temperature coolant A cooled by, for example, an unillustrated cooling part, and an inflow high-temperature coolant B supplied from the engine.

Namely, this control system includes a bypass port 33 to which the high-temperature coolant B is supplied, and a radiator link port 31 to which the low-temperature coolant A is supplied. In a housing body interior 32, the low-temperature coolant A and the high-temperature coolant B are mixed with each other to produce the coolant C. The generated coolant C will be supplied to the engine (not shown) via an engine link port 30.

The thermostat device 300 is characterized in that the thermostat device 300 can achieve the state where the operational state of a temperature sensing/operating part 39 is controllable only by the temperature of high-temperature coolant, and thus operates to make the temperature of the high-temperature coolant B constant.

To execute this control, the thermostat device 300 further has a casing formed by a housing body 48 and a housing cover 47 attached to the housing body 48. The housing body 48 has internal shapes molded to correspond to the bypass port 33 and the engine link port 30. The housing cover 47 has a shape molded to correspond to the radiator link port 31. The housing body 48 and the housing cover 47 are each made of aluminum (die-casting), a plastic, or the like.

The thermostat device 300 includes the temperature sensing/operating part 39, a piston shaft 34 having one end retained in the temperature sensing/operating part 39, a piston shaft support 35 which is formed on that side of the radiator link port 31 and supports the other end of the piston shaft 34, a main valve 36 integrally attached to the temperature sensing/operating part 39, a spring 41 which presses the main valve 36 toward the radiator link port 31, and a high-temperature-coolant rectification part 42 protruding from the bypass port 33 toward the housing body interior 32, and connected via a discharge opening 46 to the housing body interior 32 from the bypass port 33. The main valve 36 serves as a valve body in letting the low-temperature coolant A flow out to the engine link port 30. When the main valve 36 is driven together with the temperature sensing/operating part 39 attached thereto integrally, the valve body can be opened or closed.

The material for the high-temperature-coolant rectification part 42 is, for example, a resin, which is not restrictive. The upper end of the high-temperature-coolant rectification part 42 is positioned above the lower end of the temperature sensing/operating part 39 as shown in Fig. 1. Consequently, the lower end of the temperature sensing/operating part 39 enters the high-temperature-coolant rectification part 42. Here, "above" is equivalent to the direction toward the radiator link port 31, and "under" is equivalent to the direction toward the bypass port 33. The same applies to the following description. The inside diameter of the high-temperature-coolant rectification part 42 is set larger than the outside diameter of the temperature sensing/operating part 39. The upper end of the high-temperature-coolant rectification part 42 is not limited to the case where the upper end is always positioned above the lower end of the temperature sensing/operating part 39, and the lower end of the temperature sensing/operating part 39 may be positioned above the upper end of the high-temperature-coolant rectification part 42 during the process in which the temperature sensing/operating part 39 moves up and down.

The thermostat device 300 shown in Fig. 1 has a high-temperature-coolant rectification structure in which the high-temperature-coolant rectification part 42 is communicated and extended to partially or entirely cover the temperature sensing/operating part 39, and the clearance between the high-temperature-coolant rectification part 42 and the temperature sensing/operating part 39 forms a circulation passage for the high-temperature coolant B, so that the high-temperature coolant B flowing in the high-temperature-coolant rectification part 42 is allowed to flow out from the discharge opening 46 after being in contact with the periphery (bottom surface/side surface) of the temperature sensing/operating part 39.

The aforementioned spring 41 is fitted over the upper periphery of the high-temperature-coolant rectification part 42. A frame 59 abuts on the high-temperature-coolant rectification part 42. One end of the frame 59 is fixed to a sheet 55. The sheet 55, the piston shaft support 35 and the frame 59 are securely linked together to form a so-called valve seat member. The end of the sheet 55 is held and secured between the housing cover 47 and the housing body 48 via a seal member 56. An engagement portion 59a is provided at the lower portion of the frame 59. Although the frame 59 is made by a narrow band-like metal plate, it may be formed to take any shape. Since the piston shaft support 35 is continual to the upper end of the piston shaft 34, the frame 59 can be made continual from the upper end of the piston shaft 34 via the sheet 55. The engagement portion 59a at the lower portion of the frame 59 is continual to the sheet 55.

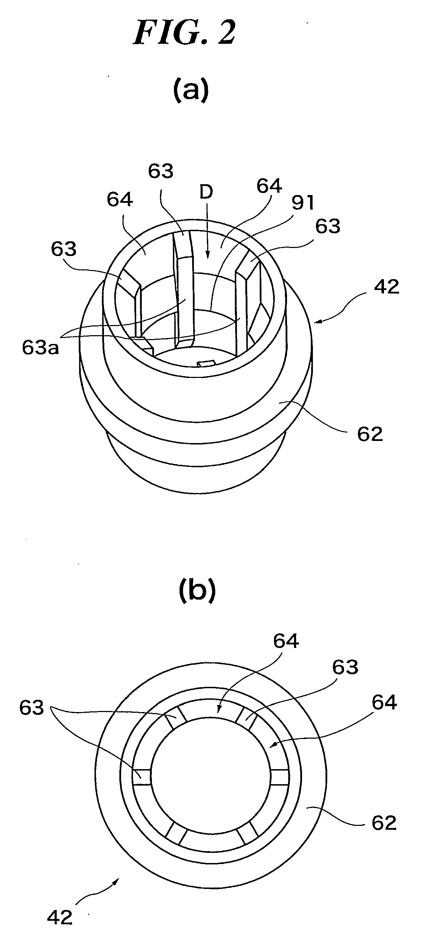

Fig. 2A is a perspective view of the high-temperature-coolant rectification part 42, and Fig. 2B is a plan view thereof. A receiving part 62 is structured to protrude outside from the outer peripheral surface, and has a shape whose diameter increases outward. The receiving part 62 is disposed so that the spring 41 is engaged with the receiving part 62 when the spring 41 is fitted. That is, the spring 41 is fitted so as to be held between the main valve 36 and the receiving part 62. As a result, the spring 41 presses the main valve 36 in a valve closing direction E. The spring 41 also presses the receiving part 62 in a direction F away from the main valve 36.

The high-temperature-coolant rectification part 42 has a plurality of ribs 63 protruding from the inner wall along a fitting-in direction D. The ribs 63 are linear substantially in the fitting-in direction D. A top surface 63a of the rib 63 is curved along the shape of the temperature sensing/operating part 39. As the temperature sensing/operating part 39 is inserted into the area that is surrounded by the ribs 63, the temperature sensing/operating part 39 can be guided and fitted to be stable by the ribs 63. Grooves 64 are formed between the ribs 63, and the passage for the high-temperature coolant B is formed through the grooves 64. The high-temperature-coolant rectification part 42 including the ribs 63 may be formed of a resin, or may be formed of a metal by pressing or the like. The high-temperature-coolant rectification part 42 may be provided with a reduced-diameter portion 91 whose diameter is reduced inward in the middle in the fitting-in direction D. The provision of the reduced-diameter portion 91 makes it possible to structure the clearance between the temperature sensing/operating part 39 and the high-temperature-coolant rectification part 42 in a restrictable manner according to the driving of the temperature sensing/operating part 39. Consequently, when the temperature of the high-temperature coolant B is high, a larger amount of the high-temperature coolant B can be fed to the radiator to maximize the cooling performance.

Next, the operation of the thermostat device 300 with the foregoing configuration will be described. When the hot high-temperature coolant B is supplied to the bypass port 33, the high-temperature coolant B is supplied to the high-temperature-coolant rectification part 42. The high-temperature-coolant rectification part 42 can make the supplied high-temperature coolant B directly contact the periphery of the temperature sensing/operating part 39.

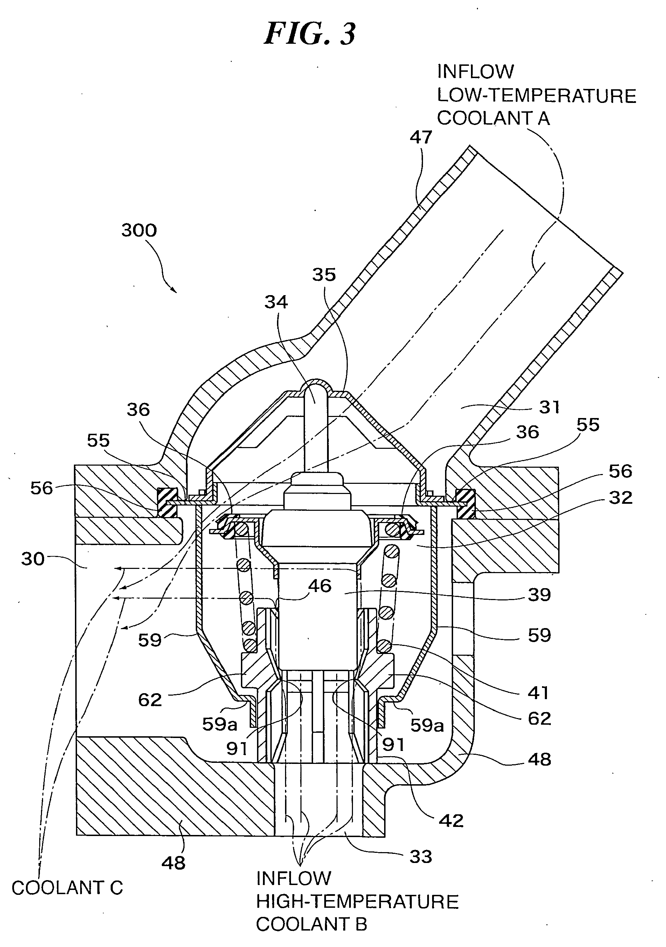

The temperature sensing/operating part 39 is fitted and inserted in the high-temperature-coolant rectification part 42 in a stationary state beforehand. The high-temperature coolant B will pass between the temperature sensing/operating part 39 and the high-temperature-coolant rectification part 42 to flow out to the housing body interior 32. This makes it possible to permit the high-temperature coolant B to directly contact the periphery (bottom surface/side surface) of the temperature sensing/operating part 39 for heat transfer without impairing the temperature and the flow rate of the high-temperature coolant B. Accordingly, the temperature sensing/operating part 39 can detect the temperature of the high-temperature coolant B with high efficiency, and can be operated according to the temperature of the high-temperature coolant B. Fig. 3 shows the state where the temperature sensing/operating part 39 is operated.

Further, the high-temperature coolant B which has flowed out of the discharge opening 46 into the housing body interior 32 firstly flows to surround the periphery of the temperature sensing/operating part 39. This can provide a state where the high-temperature coolant dominates the area where the temperature sensing/operating part 39 is disposed.

The main valve 36 is pressed by the spring 41, so that when the temperature sensing/operating part 39 is not driven, the radiator link port 31 and the housing body interior 32 are shielded from each other. When the high-temperature coolant B of a predetermined temperature or higher is supplied into the high-temperature-coolant rectification part 42, on the other hand, the temperature sensing/operating part 39 is driven toward the bypass port 33, and accordingly, the main valve 36 is opened and driven against the load of the spring 41. This makes it possible to increase the inflow rate of the low-temperature coolant A from the radiator link port 31 to the housing body interior 32. As a result, the thermostat device 300 can control the inflow rate of the low-temperature coolant A from the radiator link port 31 to the housing body interior 32 according to the temperature of the high-temperature coolant B.

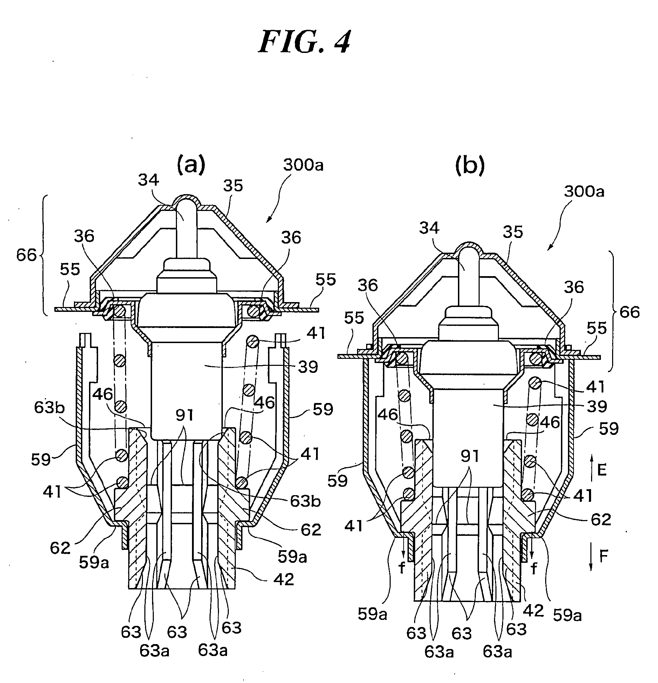

Next, the method of assembling the thermostat device 300 with the foregoing configuration will be described. First, as shown in Fig. 4A, the piston shaft support 35 to which the upper end of the piston shaft 34 is connected, the main valve 36, the sheet 55, the temperature sensing/operating part 39, etc. are regarded as an upper unit 66. The lower end of the receiving part 62 of the high-temperature-coolant rectification part 42 is engaged with the engagement portion 59a at the lower portion of the frame 59. Further, the spring 41 is fitted between the upper end of the receiving part 62 of the high-temperature-coolant rectification part 42 and the main valve 36. It is to be noted that in the stage shown in Fig. 4A, the spring 41 is hardly contracted. At this time, the center shaft of the temperature sensing/operating part 39 in the upper unit 66 and the center shaft of the high-temperature-coolant rectification part 42 are not likely to be aligned with each other, as shown in Fig. 4A.

Next, as shown in Fig. 4B, the upper unit 66 including the piston shaft support 35 is pushed downward to attach the upper end of the frame 59 to the sheet 55. In this push-down step, the temperature sensing/operating part 39 is fitted and inserted into the high-temperature-coolant rectification part 42. At this time, the temperature sensing/operating part 39 is guided by a taper 63b provided at the upper end of the high-temperature-coolant rectification part 42 and the ribs 63, so that the temperature sensing/operating part 39 can be inserted almost straight along the top surfaces 63a of the ribs 63, and eventually, the center shaft of the temperature sensing/operating part 39 and the center shaft of the high-temperature-coolant rectification part 42 can be aligned with each other. As a result, it is possible to prevent the spring 41 from being tilted in some direction when the upper unit 66 pushes down the temperature sensing/operating part 39 while gradually compressing and elastically deforming the spring 41, so that the upper unit 66 can be fitted stably and accurately. With the upper end of the frame 59 attached to the sheet 55, the spring 41 is elastically contracted, so that the main valve 36 is pressed in the valve closing direction E by the spring 41, and the receiving part 62 is pressed in the direction F away from the main valve 36. In the high-temperature-coolant rectification part 42 in which the receiving part 62 is pressed in the direction F, the engagement portion 59a at the lower portion of the frame 59 is engaged with the lower end of the receiving part 62. In other words, the frame 59 has the engagement portion 59a engaged with the receiving part 62 in the high-temperature-coolant rectification part 42. That is, the frame 59 including the engagement portion 59a is continual from the upper end of the piston shaft 34, and engages with the urged receiving part 62 while receiving urging force f thereof.

A thermostat device 300a to which the invention is adapted may be worked out when the assembly in Fig. 4B is completed, or may be attached to the housing body 48 and the housing cover 47 as shown in Fig. 1. When the thermostat device 300a is actually attached to the housing body 48 and the housing cover 47, it is attached to the housing cover 47 via the sheet 55, and the high-temperature-coolant rectification part 42 is pressed toward the bypass port 33 (coolant circuit side). As a result, the spring 41 is slightly elastically contracted, and the receiving part 62 and the engagement portion 59a of the frame 59 are separated from each other.

That is, when the thermostat device 300a is assembled in such a way that the high-temperature-coolant rectification part 42 is communicated with the bypass port 33 of the housing body 48, the receiving part 62 in the high-temperature-coolant rectification part 42 appears from the engagement portion 59a of the frame 59, and the bottom surface of the high-temperature-coolant rectification part 42 is tightly pressed on the surface of the bypass port 33 side of the housing body 48 by the urging force of the spring 41. Accordingly, leakage of the high-temperature coolant B from the clearance between the housing body 48 (bypass port 33) and the high-temperature-coolant rectification part 42 can be suppressed. It is therefore possible to effectively bring about the above-described capability of the high-temperature-coolant rectification part 42.

Since the receiving part 62 of the high-temperature-coolant rectification part 42 is structured to appear from the engagement portion 59a of the frame 59, the dimensional variations of the individual parts in the direction E and the direction F can be absorbed by the spring 41.

Unlike the related art, sealing can be achieved without using a seal member like rubber. This can eliminate the need for a step of attaching the seal member, and naturally eliminate the need for a step of applying a lubrication member for insertion or the like. It is therefore possible to overcome the problem that the seal member comes off or is not attached during the working operation, simplifying and reliably achieving the manufacturing process.

In addition, the step of communicating the high-temperature-coolant rectification part 42 with the bypass port 33 of the housing body 48 becomes the step of simply pressing the bottom surface of the high-temperature-coolant rectification part 42 against the peripheral surface of the outlet of the bypass port 33 of the housing body 48. Unlike in the related art, therefore, it is unnecessary to perform an operation of looking for the position of attachment at a portion which cannot be visually confirmed. This can simplify the process and improve the assembling efficiency, so that the reliable assembly can be achieved at a low cost.

Further, particular attention need not be paid to the coaxiality of the center shaft of the temperature sensing/operating part 39 with the center shaft of the high-temperature-coolant rectification part 42, and the individual parts which define this coaxiality do not require particularly high dimensional accuracy. This can achieve cost reduction.

When the engagement portion 59a of the frame 59 which receives the urging force of the spring 41 and supports the high-temperature-coolant rectification part 42 before the assembling step ends the role of receiving the urging force of the spring 41 when the assembly is finished to become the state as shown in Fig. 1. Accordingly, the frame 59 should perform the role of receiving the urging force of the spring 41 until the assembling step, so that consideration on the strength or the like can be comparatively simple. Therefore, the frame 59 can be made thin and the selection range of materials can be widened, resulting in achievement of weight reduction and cost reduction. Further, if the frame 59 which is likely to interfere with the flow of each coolant can be made thin, such structure will contribute to reducing the pressure loss when the coolant flows.

According to the invention, the ribs 63 are protrusively provided in the high-temperature-coolant rectification part 42. This makes it possible to improve the assembling efficiency and achieve simple and reliable assembly at a low cost. That is, at the time the temperature sensing/operating part 39 is inserted into the high-temperature-coolant rectification part 42 while compressing the spring 41, the guided insertion of the temperature sensing/operating part 39 and the position thereof can be carried out easily by the shape of the ribs 63 near the discharge opening 46 of the high-temperature-coolant rectification part 42. In addition, the taper 63b whose diameter becomes larger upward is provided near the discharge opening 46 of the high-temperature-coolant rectification part 42, so that if the center shaft of the temperature sensing/operating part 39 is misaligned with the center shaft of the high-temperature-coolant rectification part 42, the temperature sensing/operating part 39 can be guided by the taper 63b when the temperature sensing/operating part 39 is pushed in. As a result, the center shaft of the temperature sensing/operating part 39 can be aligned with the center shaft of the high-temperature-coolant rectification part 42.

Guiding and inserting the temperature sensing/operating part 39 into the discharge opening 46 which has a sufficiently large diameter compared with the outside diameter of the temperature sensing/operating part 39 as shown in Fig. 4A at the time of assembling the thermostat device can be easily achieved even if the temperature sensing/operating part 39 is tilted slightly. The ribs 63 are formed in such a way that when the temperature sensing/operating part 39 guided to the discharge opening 46 is pushed further in the depth direction of the high-temperature-coolant rectification part 42, it is smoothly inserted in the support guide part formed by the ribs 63 in the high-temperature-coolant rectification part 42, and supported guided there.

The thermostat device 300 to which the invention is adapted can improve the assembling efficiency and achieve the simple and reliable assembly at a low cost.

Further, the invention which has the ribs 63 protrusively provided in the high-temperature-coolant rectification part 42 demonstrates the following accompanying advantages.

To efficiently transfer heat to the temperature sensing/operating part 39, the high-temperature coolant B as a heat medium needs to contact as a wider area of the top surface of the temperature sensing/operating part 39 as possible, and the flow rate of the high-temperature coolant B on the contact area to the temperature sensing/operating part 39 needs to be made faster. According to the structure of the support guide part of the thermostat device 400 of the related art described above, the main flow of the high-temperature coolant B passes through the unillustrated holes provided in the support guide part, and cannot smoothly pass the top surface of the temperature sensing portion of the temperature sensing/operating part 39, so that the support guide part inhibiting the efficient heat transfer between the high-temperature coolant B and the temperature sensing/operating part 39.

According to the invention, by way of contrast, the high-temperature coolant B flowed into the high-temperature-coolant rectification part 42 flows along the grooves 64, so that the high-temperature coolant B can smoothly pass while being in contact with the wide top surface of the temperature sensing/operating part 39.

According to the related art, the flow rate of the high-temperature coolant B becomes fastest when it passes through the holes provided in the support guide part, in which case the high-temperature coolant B contacts the top surface of the temperature sensing/operating part 39 at a reduced flow rate before and after passing through the holes.

According to the invention, by way of contrast, the grooves 64 constituting the valleys of the ribs 63 are main passages of the high-temperature coolant, but the cross area of that portion where the high-temperature coolant B passes can be adjusted to allow the high-temperature coolant B having a properly fast flow rate to directly contact the wide top surface of the temperature sensing/operating part 39 and function.

The invention with the foregoing configuration can improve the temperature sensitivity of the temperature sensing/operating part 39, and quickly detect and control the coolant temperature with high response and accuracy. In addition, it is possible to reduce the resistance against the passing of the high-temperature coolant B inside the high-temperature-coolant rectification part 42, contributing to compact designing of the thermostat device 300 and the bypass passage (high-temperature coolant passage) of the engine cooling system, and eventually contributing to weight reduction and reduction of fuel consumption.

According to the related art, the support guide part is made by parts formed of steel by bending, pressing or the like, and is integrated with the high-temperature-coolant rectification part through the resin insert molding step, so that the manufacturing process is complicated and the manufacturing cost is high.

According to the invention, by way of contrast, the high-temperature-coolant rectification part 42 and the ribs 63 as the support guide part can be provided by a single integrated part by resin molding, metal pressing or the like, so that the various advantages mentioned above can be achieved at a low cost.

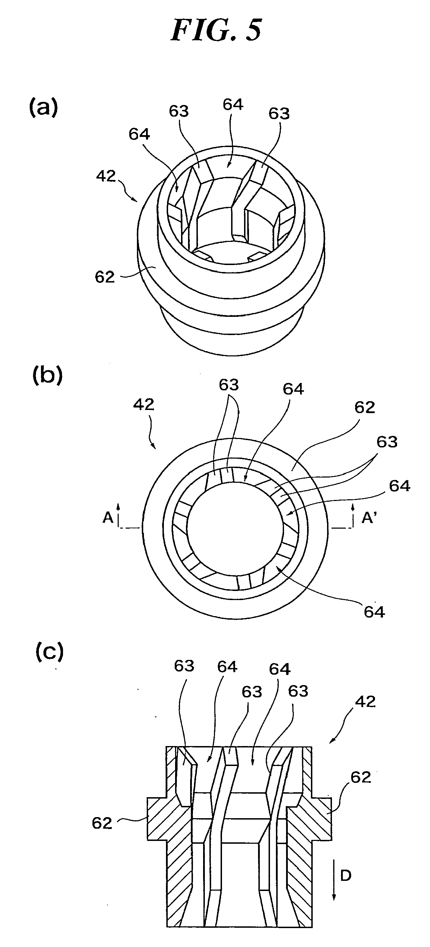

According to the invention, a plurality of ribs 63 in the high-temperature-coolant rectification part 42 may be formed helically. Fig. 5A is a perspective view of the high-temperature-coolant rectification part 42 when the ribs 63 are made helical, and Fig. 5B is a plan view of the high-temperature-coolant rectification part 42. Fig. 5C is a cross-sectional view taken along the line A-A' in Fig. 5B. The ribs 63 are formed to be gradually twisted in the fitting-in direction D.

The temperature sensing/operating part 39 is fitted and inserted into the area surrounded by the ribs 63. The movement of the temperature sensing/operating part 39 produces friction between the ribs 63 and the temperature sensing/operating part 39. The portion which makes the frictional slide is part of the peripheries of the ribs 63 where the ribs 63 abut on and support the temperature sensing/operating part 39. This is because the spring 41 urges the main valve 36 integrated with the temperature sensing/operating part 39 in the valve closing direction E, and a lateral load is applied to the temperature sensing/operating part 39 in a certain direction through the main valve 36 due to the influence of the end position or the like of the helical spring constituting the spring 41.

Further, since the temperature sensing/operating part 39 is supported and guided by the shape of the ribs 63 according to the invention, the portion where the temperature sensing/operating part 39 makes the frictional slide becomes a more local portion, which may greatly wear out the frictional slide portion.

Especially, when the ribs 63 are formed of a resin, a resin containing an adequate amount of glass fibers may be used in order to assure the strength and retain the shape under the use environment. When the ribs 63 are formed of a resin containing glass fibers, however, wearing of the temperature sensing/operating part 39 formed of a copper alloy is accelerated by the frictional slide with the ribs 63. Further progress of this wear-out may lead to deterioration or failure of the function of the temperature sensing/operating part 39 itself.

Accordingly, the ribs 63 are provided in the aforementioned manner, so that as the temperature sensing/operating part 39 is driven, the position and the range of the temperature sensing/operating part 39 which contacts and slides on the ribs 63 changes in the fitting-in direction D. Therefore, sliding and worn portions between the temperature sensing/operating part 39 and the ribs 63 are distributed, suppressing the progress of wearing and increasing the durability.

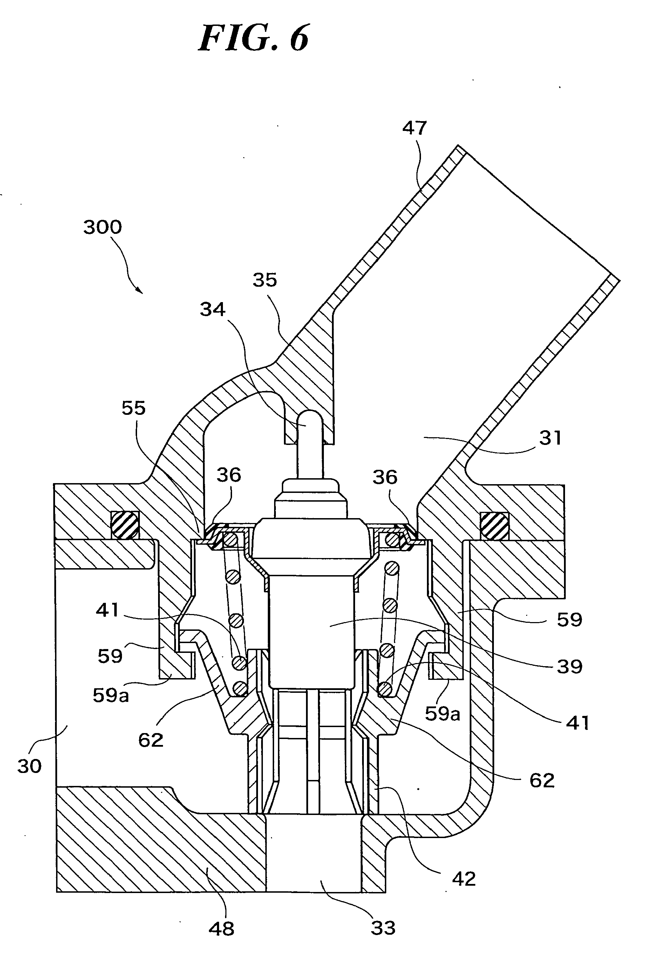

The thermostat device 300 to which the invention is adapted is not limited to the foregoing embodiment. As shown in Fig. 6, for example, the piston shaft support 35 may be provided on the housing cover 47. In the mode of Fig. 6, the frame 59 is also formed integral with the housing cover 47.

In the mode of Fig. 6, therefore, the frame 59, the sheet 55, and the piston shaft support 35 are continual to one another. Since the piston shaft support 35 is continual to the upper end of the piston shaft 34, the frame 59 can be said to be continual from the upper end of the piston shaft 34. The lower end of the frame 59 protrudes inward to form the engagement portion 59a.

In this example, the receiving part 62 is likewise provided on the outer periphery of the high-temperature-coolant rectification part 42. The receiving part 62 is extended obliquely upward and its tip is bent substantially in parallel to the top surface of the engagement portion 59a so that the tip can be engaged with the engagement portion 59a.

Same reference numerals are given to those constituting elements and members of the thermostat device 300 shown in Fig. 6 which are the same as those shown in Fig. 1 to omit their redundant descriptions below.

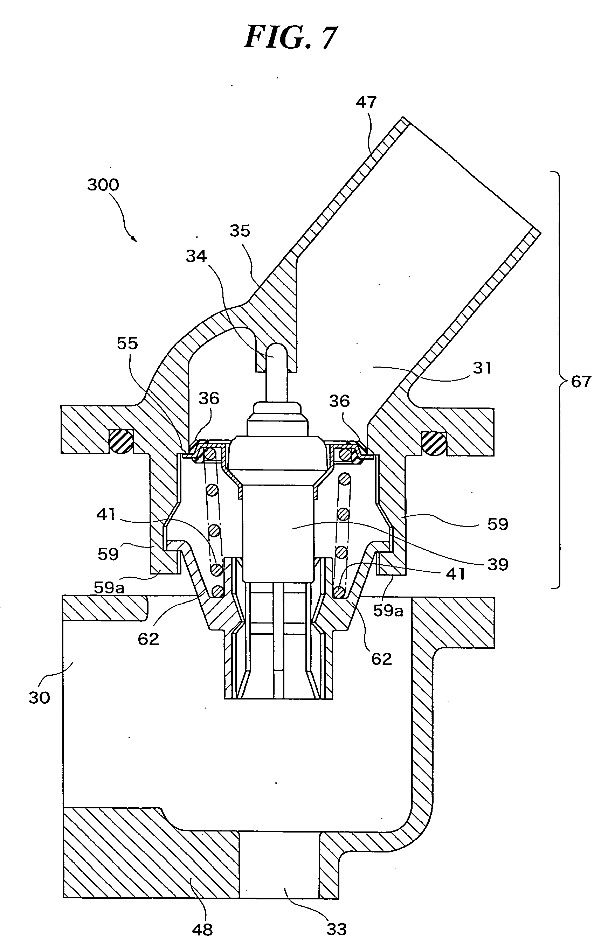

When the thermostat device 300 comprising the aforementioned configuration is actually assembled, the piston shaft 34 is attached to the piston shaft support 35 of the housing cover 47, and the spring 41 is fitted between the main valve 36 and the receiving part 62 as shown in Fig. 7, for example. Then, the receiving part 62 and the frame 59 are engaged with each other. This structural state is referred to as an upper unit 67. Next, the upper unit 67 is pushed down to press the high-temperature-coolant rectification part 42 against the top surface of the housing body 48. As a result, the spring 41 is further elastically contracted, and the receiving part 62 and the engagement portion 59a of the frame 59 are separated from each other as shown in Fig. 6.

This mode of course brings about the same advantages as mentioned above.

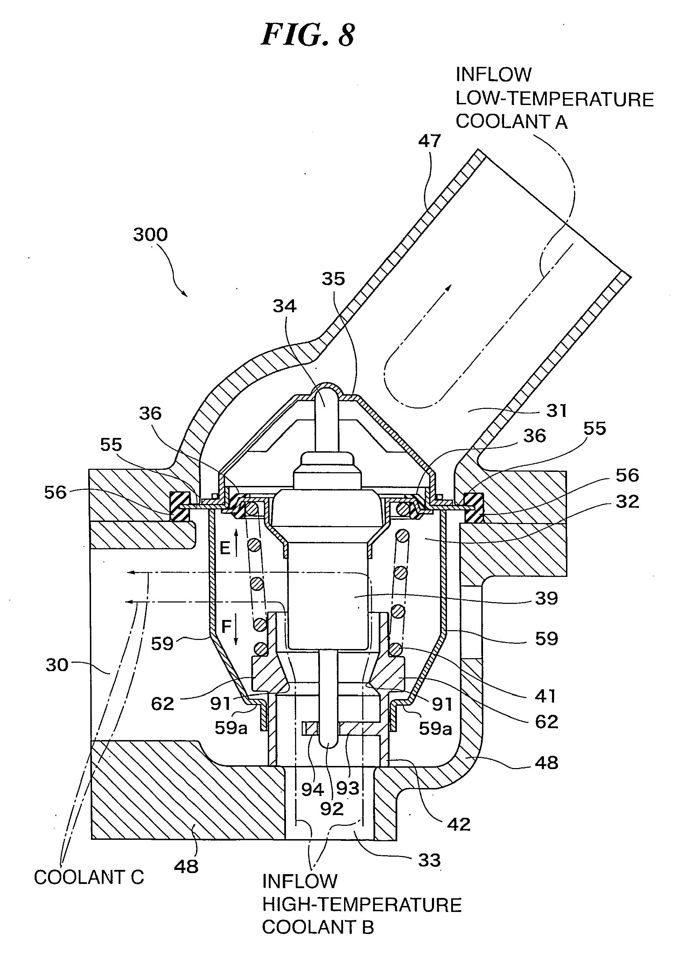

According to the invention, as shown in Fig. 8, the thermostat device may include an extending shaft 92 extending downward from the temperature sensing/operating part 39, and a support guide part 93 formed on the inner wall of the high-temperature-coolant rectification part 42 to support and guide the extending shaft 92. A hole 94 is formed in the support guide part 93 penetrating from the top surface thereof to the bottom surface, so that the extending shaft 92 can be inserted in the hole 94. This structure can permit the center shaft of the temperature sensing/operating part 39 to be aligned with the center shaft of the high-temperature-coolant rectification part 42.

## Claims

1. A thermostat device comprising:
a temperature sensing/operating part provided in a coolant circuit of an engine or the like and incorporating a thermal expansion element which thermally expands or contracts according to a change in a temperature of a coolant;
a piston shaft which has one end retained in the temperature sensing/operating part and slides with thermal expansion and contraction of the thermal expansion element, a valve body being opened/closed by driving of the piston shaft;
a high-temperature-coolant rectification part configured to enable communication and extension of a high-temperature coolant passage to bypass a high-temperature coolant heated by the engine to the thermostat device so that the high-temperature coolant partially or entirely covers the temperature sensing/operating part, the high-temperature-coolant rectification part letting the high-temperature coolant flowing in the high-temperature coolant passage flow out from a discharge opening after being in contact with a periphery (bottom surface/side surface) of the temperature sensing/operating part;
a receiving part provided on an outer periphery side of the high-temperature-coolant rectification part;
an urging member fitted between the valve body and the receiving part to press the valve body in a valve closing direction and press the receiving part in a direction away from the valve body; and
an engagement member continual to a valve seat member on which the valve body pressed in the valve closing direction is pressed to be closed, and engageable with the pressed receiving part while receiving urging force thereof.

2. The thermostat device according to claim 1, wherein when the high-temperature-coolant rectification part is provided to communicate with the high-temperature coolant passage, the high-temperature-coolant rectification part is pressed toward the high-temperature coolant passage to contract the urging member to enable separation of the receiving part and the engagement member from each other.

3. The thermostat device according to claim 1 or 2, comprising a support guide part to cause the temperature sensing/operating part to be guided and inserted into the high-temperature-coolant rectification part, the support guide part having a shape of a plurality of ribs protruding from an inner wall of the high-temperature-coolant rectification part.

4. A thermostat device comprising:
a temperature sensing/operating part provided in a coolant circuit of an engine or the like and incorporating a thermal expansion element which thermally expands or contracts according to a change in a temperature of a coolant;
a piston shaft which has one end retained in the temperature sensing/operating part and slides with thermal expansion and contraction of the thermal expansion element, a valve body being opened/closed by driving of the piston shaft; and
a high-temperature-coolant rectification part configured to enable communication and extension of a high-temperature coolant passage to bypass a high-temperature coolant heated by the engine to the thermostat device so as to partially or entirely cover the temperature sensing/operating part, the high-temperature-coolant rectification part letting the high-temperature coolant flowing in the high-temperature coolant passage flow out from a discharge opening after being in contact with a periphery (bottom surface/side surface) of the temperature sensing/operating part,
part of a surface of an inner wall of the high-temperature-coolant rectification part serving as a support guide part to enable insertion of the temperature sensing/operating part.

5. The thermostat device according to claim 4, wherein the support guide part has a shape of a plurality of ribs protruding from the inner wall of the high-temperature-coolant rectification part.
